# EUROPEAN PATENT APPLICATION

(11) **EP 2 581 517 A1**
(43) Date of publication of application: **17.04.2013**
(21) Application number: 12186791.5
(22) Date of filing: 01.10.2012
(51) Int. Cl.: E04C 2/32, F03D 11/04, E04H 12/08

(54) **Wind turbine tower section and method of assembling a wind turbine tower**

(30) Priority: 05.10.2011 US 201113253643
(71) Applicant: General Electric Company, Schenectady, NY 12345 (US)
(72) Inventor: Haridasu, Balaji, 560066 Karnataka (IN); Fang, Biao, Schenectady, NY New York 12345 (US); Pulari, Nageswara Rao, 560066 Karnataka (IN)
(74) Representative: Bedford, Grant Richard

(57) **Abstract**

A structural section (128) for a tower mast and a method for manufacturing the section (128). The section (128) comprises a sheet (130) comprising a first end (132), a second end (134) and a body (140) disposed between the first end (132) and the second end (134). A plurality of profiles (148) are formed within the body (140), each profile (148) comprising a deformation (150) offset from the body (140). A fastener is configured to contact the first end (132) to the second end (134) to facilitate forming the body (140) about a longitudinal axis (124) and facilitate radially positioning the plurality of profiles (148) around the longitudinal axis (124).

## Description

The subject matter described herein relates generally to wind turbines, and more particularly, to a structural section for a wind turbine tower.

Generally, a wind turbine includes a rotor that includes a rotatable hub assembly having multiple blades. The blades transform wind energy into a mechanical rotational torque that drives one or more generators via the rotor. The generators are sometimes, but not always, rotationally coupled to the rotor through a gearbox. The gearbox steps up the inherently low rotational speed of the rotor for the generator to efficiently convert the rotational mechanical energy to electrical energy, which is fed into a utility grid via at least one electrical connection. The rotor, generator, gearbox and other components are typically mounted within a housing, or nacelle, that is positioned on a base that includes a truss or tubular tower.

Wind turbine towers typically include a number of round sections coupled to each other. The tower sections are usually bolted together through internally placed horizontal flanges, which are welded to the top and bottom of each tower section. Large towers are needed to support wind turbines and the towers need to withstand strong lateral forces caused by environmental conditions such as the wind. The tower sections require large wall thicknesses to withstand these forces leading to high material, manufacturing and transportation costs for the completed tower. Additionally, tons of required mass are added to the base of the tower to meet stiffness requirements so as to withstand the strong lateral, wind forces. For example, for some known towers, approximately 30 tons of mass is added to the tower base to comply with stiffness requirements.

Some of the known tower manufacturing processes involve many labor and equipment intensive steps. Generally, during manufacturing, an extruded sheet of metal is sheet rolled around a longitudinal welding machine at an offsite location. The welder longitudinally welds the rolled sheets to a tower length, known as a "can". Cans are then moved and mounted on blocks in an end-to-end configuration. A seam welder proceeds to weld an interface between adjoining cans to form a tubular tower section. Each section is then moved and loaded onto a truck for individual transportation to the tower assembly site.

Transportation regulations, however, limit load sizes of shipped products. For example, tower sections are limited in diameter to about 4.3 meters (m)(14 feet (ft), due to road transportation barriers, such as bridges that span a highway. To comply with transportation regulations, the length of each assembled tower section is curtailed. Accordingly, the number of formed tower lengths increases leading to increased manufacturing costs, transportation costs and on-site assembly costs.

In one aspect according to the present invnetion, a structural section for a tower mast is provided. The section includes a sheet comprising a first end, a second end and a body disposed between the first end and the second end. Pluralities of profiles are formed within the body, each profile includes a deformation offset from the body. A fastener is configured to facilitate coupling the first end to the second end to facilitate forming the body about a longitudinal axis and facilitate radially positioning the plurality of profiles around the longitudinal axis.

In another aspect, a method of manufacturing a structural section of a tower mast is provided. The method includes forming a sheet of material, wherein the sheet includes a first end, a second end and a body disposed therebetween. The method also includes forming a plurality of profiles within the body. The first end is coupled to the second end.

In a further aspect, a tower mast is provided. The tower mast includes a base and a structural section coupled to the base. The structural section includes a sheet having a first end and a second end. A plurality of profiles are formed within the sheet, each profile includes a deformation offset from the sheet. A fastener is configured to facilitate coupling the first end to the second end to facilitate forming the sheet about a longitudinal axis and facilitate radially positioning the plurality of profiles around the longitudinal axis. The tower also includes a nacelle coupled to the structural section. Various aspects and embodiments of the present invention will now be described in connection with the accompanying drawings, in which;
Fig. 1 is a schematic view of an exemplary wind turbine.
Fig. 2 is a schematic view of an exemplary embodiment of a tower section for use in facilitating assembly of a tower mast.
Fig. 3 is a schematic view of an exemplary embodiment of a sheet of profiled material that enables formation of the tower section shown in Fig. 2.
Fig. 4 is an elevational view of a portion of the sheet shown in Fig. 3.
Fig. 5 illustrates an exemplary orientation of a plurality of profiles formed within the sheet.
Fig. 6 illustrates another exemplary orientation of a plurality of profiles formed within the sheet.
Fig. 7 illustrates another exemplary orientation of a plurality of profiles formed within the sheet.
Fig. 8 illustrates an exemplary embodiment of raised profiles and sunken profiles located along the sheet shown in Fig. 3.
Fig. 9 illustrates an exemplary embodiment of sunken profiles located along the sheet shown in Fig. 3.
Fig. 10 illustrates an exemplary embodiment of sunken profiles located along the sheet shown in Fig. 3.
Fig. 11 illustrates an exemplary embodiment of an end of the profile shown in Fig. 3.
Fig. 12 illustrates another exemplary embodiment of an end of the profile shown in Fig. 3.
Fig. 13 illustrates components utilized in an exemplary manufacturing process for use in manufacturing the sheet.
Fig. 14 illustrates components utilized in another exemplary manufacturing process for use in manufacturing the sheet.
Fig. 15 illustrates components utilized in another exemplary manufacturing process for use in manufacturing the sheet.
Fig. 16 illustrates components utilized in another exemplary manufacturing process for use in manufacturing the sheet.
Fig. 17 illustrates sheets of Fig. 3 loaded on a cargo carrier.
Fig. 18 illustrates a flowchart of an exemplary method for use in manufacturing sections shown in Fig. 1.
Fig. 19 illustrates a pair of sections being coupled together at a tower assembly site.
Fig. 20 illustrates exemplary sections shown in Fig. 1 coupled to flanges.
Fig. 21 illustrates flange portions shown in Fig. 20 coupled together by a fastener.

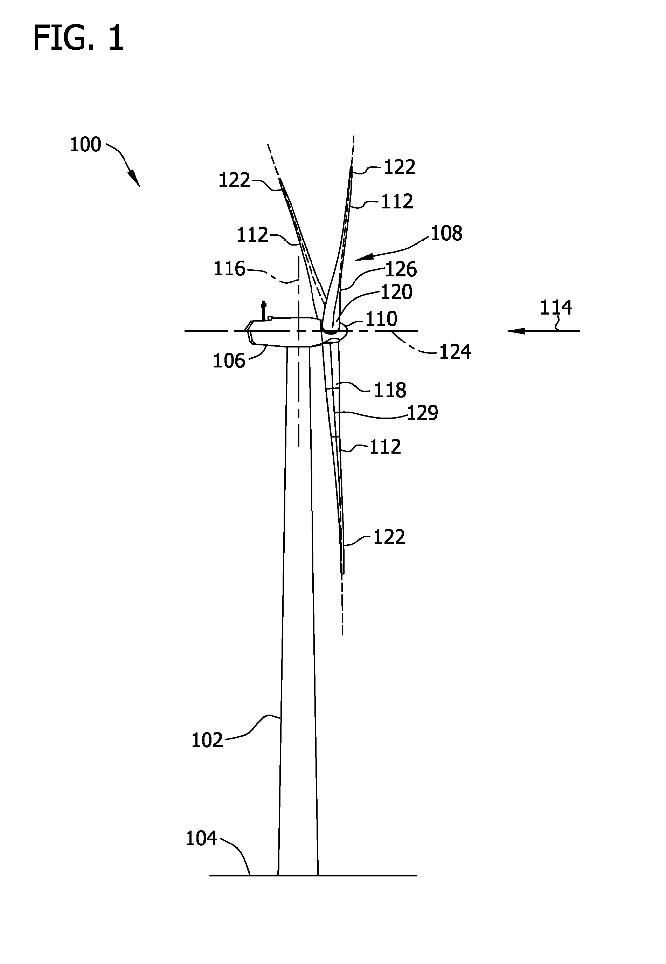

Fig. 1 is a schematic view of an exemplary wind turbine 100. In the exemplary embodiment, wind turbine 100 is a horizontal-axis wind turbine. Alternatively, wind turbine 100 may be a vertical-axis wind turbine. In the exemplary embodiment, wind turbine 100 includes a tower mast 102 extending from and coupled to a supporting surface 104. Tower 102 may be coupled to surface 104 with anchor bolts or via a foundation mounting piece (neither shown), for example. A nacelle 106 is coupled to tower 102, and a rotor 108 is coupled to nacelle 106. Rotor 108 includes a rotatable hub 110 and a plurality of rotor blades 112 coupled to hub 110. In the exemplary embodiment, rotor 108 includes three rotor blades 112. Alternatively, rotor 108 may have any suitable number of rotor blades 112 that enables wind turbine 100 to function as described herein. Tower mast 102 may have any suitable height and/or construction that enables wind turbine 100 to function as described herein.

Rotor blades 112 are spaced about hub 110 to facilitate rotating rotor 108, thereby transferring kinetic energy from wind 114 into usable mechanical energy, and subsequently, electrical energy. Rotor 108 and nacelle 106 are rotated about tower 102 on a yaw axis 116 to control a perspective, or azimuth angle, of rotor blades 112 with respect to the direction of wind 114. Rotor blades 112 are mated to hub 110 by coupling a blade root portion 118 to hub 110 at a plurality of load transfer regions 120. Each load transfer region 120 has a hub load transfer region and a blade load transfer region (both not shown in Fig. 1). Loads induced to rotor blades 112 are transferred to hub 110 via load transfer regions 120. Each rotor blade 112 also includes a blade tip 122.

In the exemplary embodiment, rotor blades 112 have a length of between approximately 30 meters (m) (99 feet (ft)) and approximately 120 m (394 ft). Alternatively, rotor blades 112 may have any suitable length that enables wind turbine 100 to function as described herein. For example, rotor blades 112 may have a suitable length less than 30 m or greater than 120 m. As wind 114 contacts rotor blade 112, blade lift forces are induced to rotor blade 112 and rotation of rotor 108 about an axis of rotation 124 is induced as blade tip 122 is accelerated.

A pitch angle (not shown) of rotor blades 112, i.e., an angle that determines the perspective of rotor blade 112 with respect to the direction of wind 114, may be changed by a pitch assembly (not shown in Fig. 1). Increasing a pitch angle of rotor blade 112 decreases blade deflection by reducing aero loads on rotor blade 112 and increasing an out-of-plane stiffness from the change in geometric orientation. The pitch angles of rotor blades 112 are adjusted about a pitch axis 126 at each rotor blade 112. In the exemplary embodiment, the pitch angles of rotor blades 112 are controlled individually. Alternatively, the pitch angles of rotor blades 112 are controlled as a group.

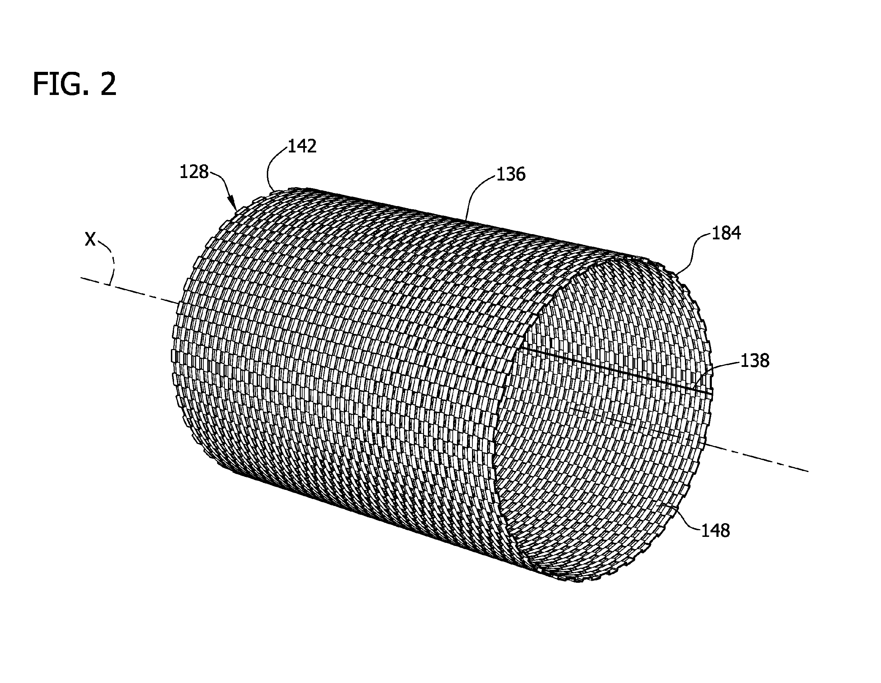

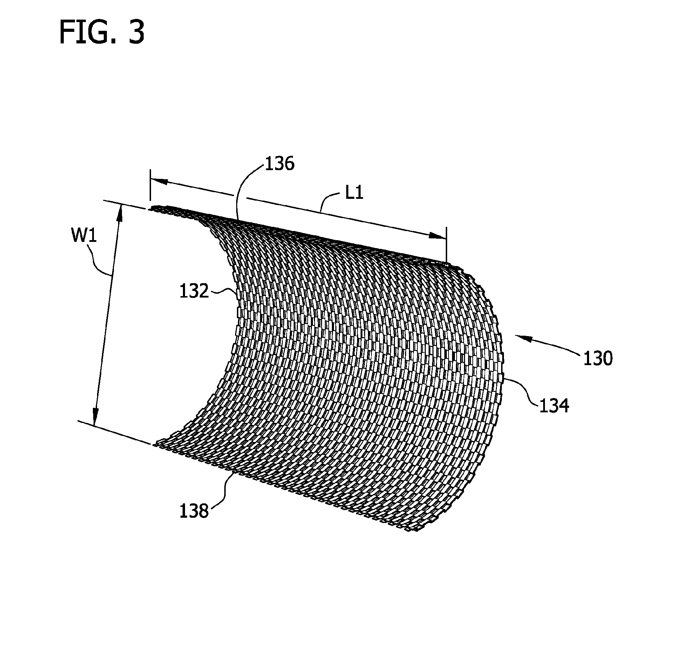

Fig. 2 is a schematic view of an exemplary embodiment of a tower section 128 for use in facilitating assembly of tower mast 102 (shown in Fig. 1). Fig. 3 is a schematic view of an exemplary sheet 130 of profiled material that enables formation of tower section 128. In the exemplary embodiment, section 128 is orientated in a tubular shape about a longitudinal axis "X". Section 128, however, can include any configuration that facilitates assembly of tower mast 102. Sheet 130 has a length L1, as measured between ends 132, 134, in the range between about 1 m and about 60 m. In the exemplary embodiment, sheet 130 has a length in the range between about 15 m and about 20 m. Sheet 130 further has a width W1, as measured between sides 136, 138, in the range between about 1 m and about 5 m. In the exemplary embodiment, sheet 130 has a width in the range between about 1 m and about 3 m. The size ranges for sheet 130 include all sub ranges therebetween. The sizing of sheet 130 facilitates complying with transportation regulations and facilitates loading, unloading and handling of sheets 130. In an embodiment (not shown), section 128 includes a substantially straight configuration to facilitate forming tower mast (not shown) having a substantially straight side shape such as, but not limited to, triangular, square, polygonal, hexagonal and octagonal shapes.

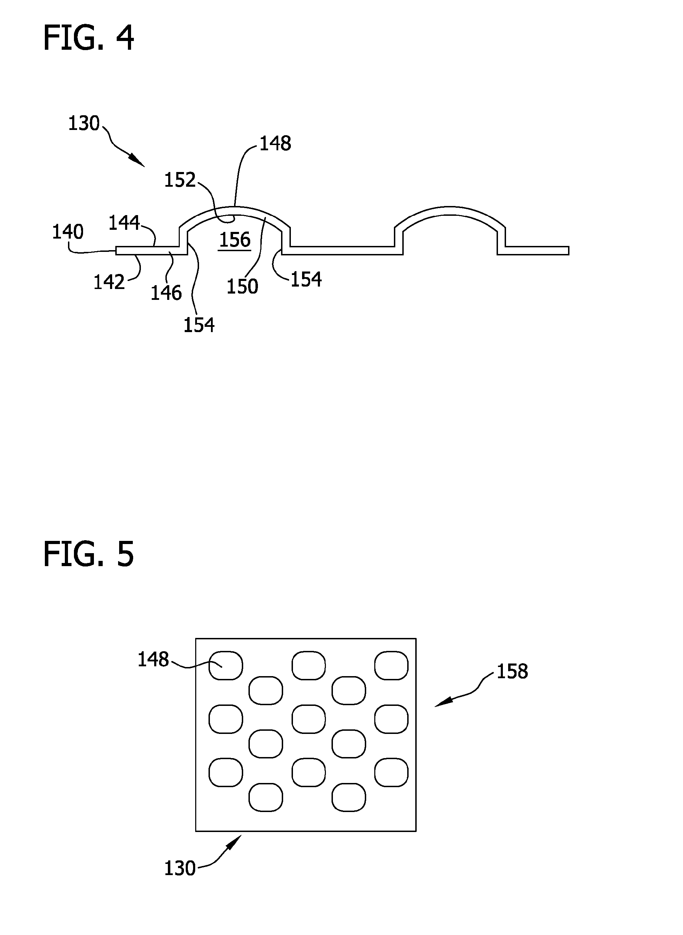

Fig. 4 is a partial elevational view of a portion of sheet 130. Sheet 130 includes a body 140 having an inner side 142, an outer side 144 and sidewalls 146 connecting inner and outer sides 142, 144. The thickness of sidewall 146, as measured between inner side 142 and outer side 144, includes a range between about 0.10 mm and about 60 mm. In the exemplary embodiment, sidewall 146 has thickness in the range between about 5 mm and about 20 mm. The composition of sheet 130 includes materials such as, but not limited to, metals, alloys or plastics. Sheet 130 may include any suitable material composition, size and/or configuration that enables construction of turbine tower masts 102 and enables turbine mast towers 102 to function as described herein.

Sheet 130 includes a plurality of profiles 148 formed within body 140. Each profile 148 includes a deformation 150 that is offset from body 140. Profile 148 may include any deformation 150 such as, but not limited to, an indentation, relief, recess, fold or bulge. In the exemplary embodiment, profile 148 includes an end 152 offset from body 140 by opposing walls 154. End 152 is offset from body 140 in a range between about 1 mm and about 20 mm. In the exemplary embodiment, end 152 is offset from body 140 in a range between about 4 mm and about 8 mm. Walls 154 and end 152 of profile 148 form a void or space 156.

Fig. 5 illustrates an exemplary orientation 158 of a plurality of profiles 148 formed within sheet 130. Orientation 158 of profiles 148 includes a plurality of layouts, shapes and sizes for profiles 148. Profiles 148 can have any layout, shape and size that increase at least the stiffness of sheet 130 while maintaining a thin wall thickness of sheet 130 to reduce the mass of sheet 130. As illustrated, orientation 158 of profiles 148 includes a repeating pattern across sheet 130. In one embodiment, orientation 158 includes a plurality of uniformly spaced and staggered rows of profiles 148. Alternatively, orientation 158 of profiles 148 can include a plurality of non-uniformly spaced and staggered rows of profiles 148.

As shown in Fig. 5, each profile 148 includes a substantially square shape having rounded corners. Rounded corners facilitate forming structural sections 128 (shown in Fig. 2) of tower mast 102 (shown in Fig. 1) free from sharp edges. Each side of profile 148 includes a range between about 50 mm and about 150 mm. In the exemplary embodiment, the size of the profile 148 is about 120 mm by about 120 mm. In one suitable embodiment, the size of the profile 148 is about 80 mm by about 80 mm. In another suitable embodiment, the size of the profile 148 is about 160 mm by about 160 mm.

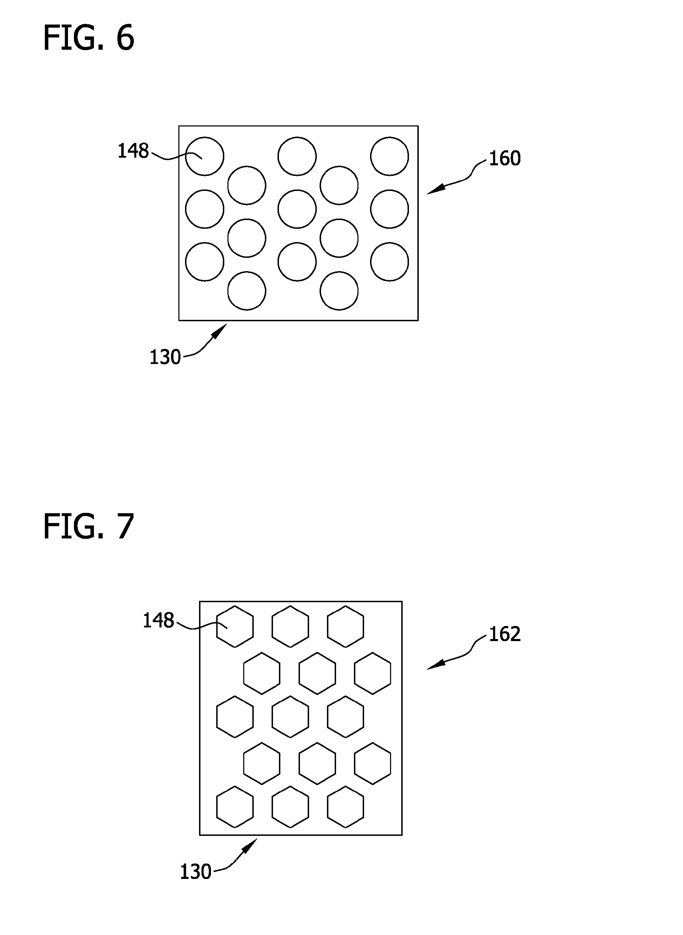

Fig. 6 illustrates another exemplary orientation 160 of a plurality of profiles 148 formed within sheet 130. Orientation 160 includes a plurality of uniformly spaced and staggered rows of profiles 148. In this embodiment, each profile 148 includes a substantially circular shape. A diameter of each profile 148 is in the range between about 50 mm and about 150 mm.

Fig. 7 illustrates another exemplary orientation 162 of a plurality of profiles 148 formed within sheet 130. Orientation 162 includes a plurality of uniformly spaced and staggered rows of profiles 148. In this embodiment, each profile 148 includes a substantially hexagonal shape, wherein each hexagonal side includes a range between about 50 mm and about 150 mm.

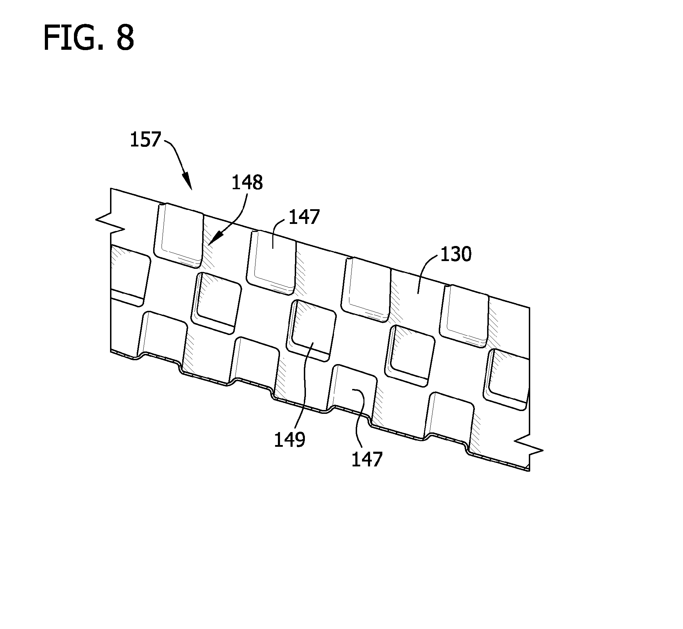

Fig. 8 illustrates another exemplary orientation 157 of a plurality of profiles 148 formed within sheet 130. Orientation 157 of plurality of profiles 148 includes a plurality of substantially uniformly spaced and staggered rows of profiles 148. In this embodiment, sequential rows of raised profiles 147 and sunken profiles 149 are located along sheet 130.

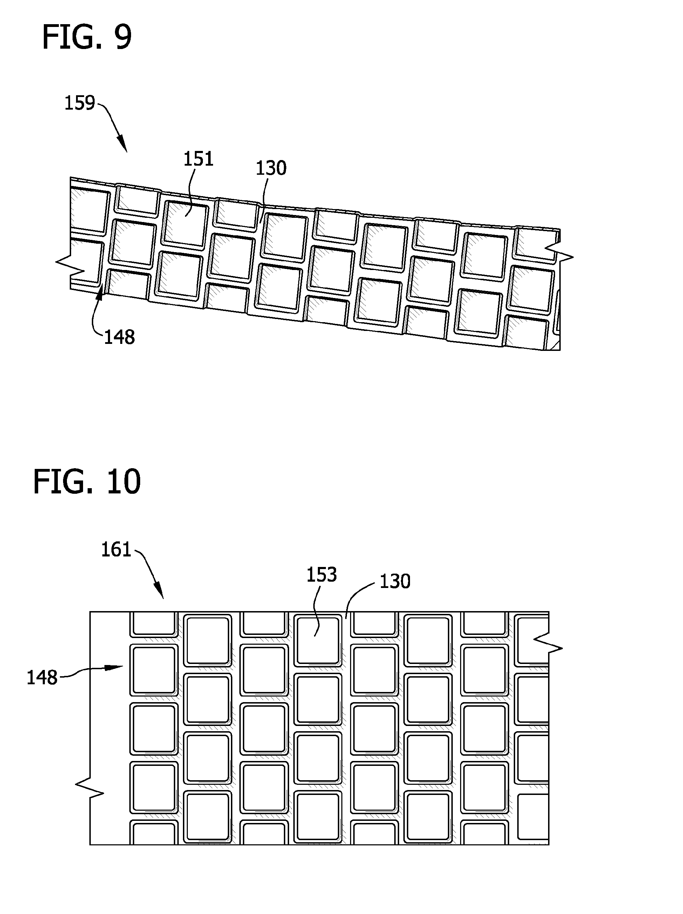

Fig. 9 illustrates another exemplary orientation 159 of a plurality of profiles 148 formed within sheet 130. Orientation 159 of plurality of profiles 148 includes a plurality of substantially uniformly spaced and staggered rows of sunken profiles 151.

Fig. 10 illustrates another exemplary orientation 161 of a plurality of profiles 148 formed within sheet 130. Orientation 161 of plurality of profiles 148 includes a plurality of substantially uniformly spaced and staggered rows of raised profiles 153.

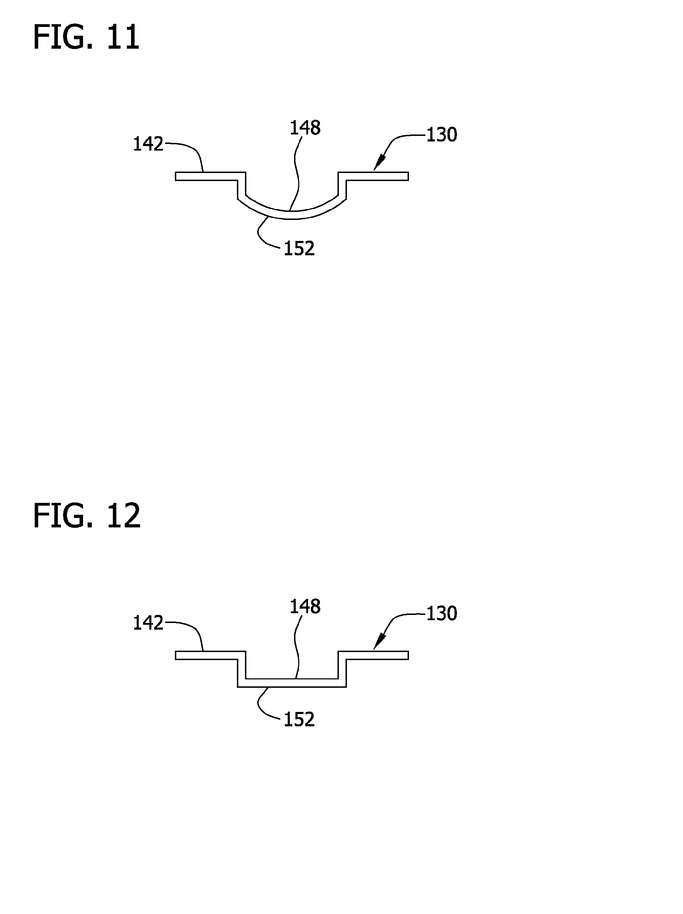

Fig. 11 illustrates an exemplary embodiment of end 152 of profile 148, wherein end 152 is substantially curved. Fig. 12 illustrates another exemplary embodiment of end 152 of profile 148, wherein end 152 is substantially straight. For the exemplary embodiments of Fig. 11 and Fig. 12, the depth of profile 148 as measured from inner side 142 of sheet 130 to end 152 includes a range from about 1 mm to about 20 mm. In the exemplary embodiment, the depth of profile 148 includes a range between about 4 mm and about 8 mm.

Profiles 148 in sheet 130 can be formed by a plurality of manufacturing processes such as, but not limited to, self-organization processes, embossing processes, punch processes cold forming processes and hot forming processes. Manufacturing processes include any process that enables forming the profiles 148 in sheet 130 to facilitate increasing stiffness of sheet 130 while maintaining a reduced sidewall thickness of sheet 130.

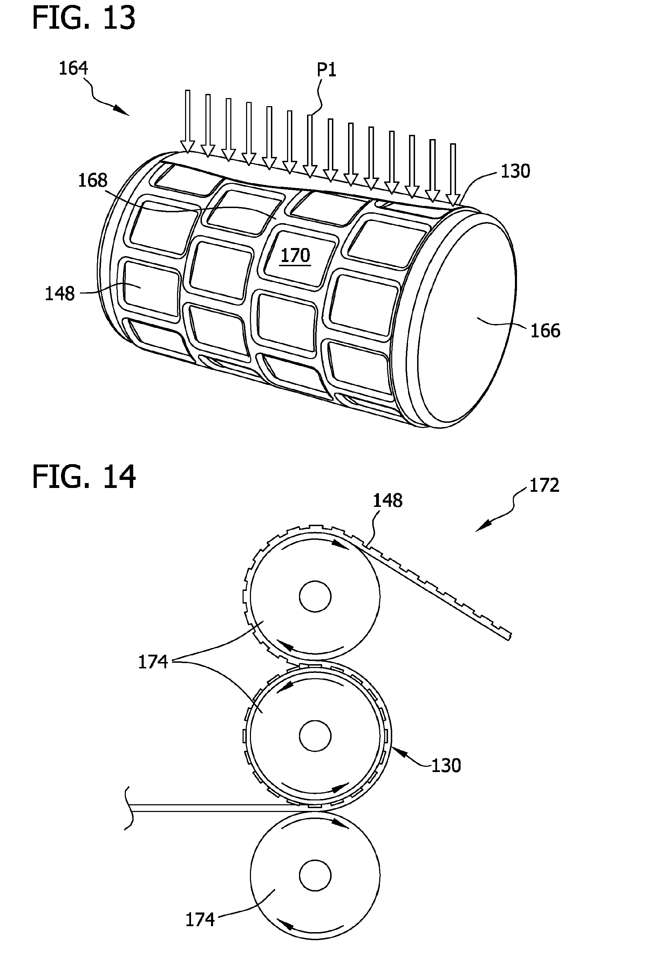

Fig. 13 illustrates components utilized in an exemplary manufacturing process. Under this process, profiles 148 are formed in sheet 130 through a self-organization process 164, known as "vault structuring". Vault structuring process 164 includes deforming a material in several dimensions while increasing material parameters such as stability, stiffness and rigidity.

In vault structuring process 164, thin walled sheets 130 are produced with repetitively arranged profiles 148. During this manufacturing process 164, inner side 142 (shown in Fig. 4) of sheet 130 is orientated around a solid, fixed core 166 having support members 168 that extend outward from core 166. Support members 168 define a space 170 between adjacent support members 168 wherein support members 168 facilitate formation of profiles 148 in sheet 130. Support members 168 include any member that enables formation of profiles 148 as described herein.

Pressure P1, such as hydro-static or elastomeric pressure, is applied to outer side 144 of sheet 130. During pressure application, sheet 130 elastically deforms between adjacent support members 168. When a critical value of pressure is reached, the material of sheet 130 forms into repetitively arranged profiles 148 based on the principal of energy minimalization and on the layout of the support members 168 so that profiles 148 self adjust to optimized shapes. During this process, sheet 130 material is deformed by self organization and develops a three dimensional fold with a low degree of plastification.

Profiles 148 of sheet 130 enhance the mechanical properties of sheet 130 by increasing bending stiffness of sheet 130. Profiles 148 provide high stiffness capabilities in all directions throughout sheet 130 while maintaining a reduced wall thickness for sheet 130. Strain hardening, which occurs during the structuring process 164, also improves the rigidity of sheet 130. Vault structuring process 164 uses simple equipment and low amounts of energy to profile sheet 130. Additionally, vault structuring process 164 is precise, accurate and fast. During the hydrostatic vault structuring process, outer side 144 of sheet 130 material is not mechanically touched during the process such that the original surface quality remains unchanged during the process.

Fig. 14 illustrates components utilized in an exemplary embodiment of a roller embossing process 172. Roller embossing process 172 includes a material forming process for forming raised or sunken profiles 148 in sheet 130 by corresponding roller dies 174. During the embossing process 172, sheet 130 is drawn through roller dies 174 having a desired pattern therein, thus forming a pattern or design of profiles 148 on sheet 130. For non-profiled sections of sheet 130, the roller embossing process 172 includes maintaining the same material thickness before and after embossing by dies 174. Depending on roller dies 174 used, more than one profile pattern can be formed on sheet 130. Roller embossing process 172 forms profiles 148 to facilitate increasing material parameters of the sheet 130 such as stability, stiffness and rigidity of the sheet 130 while maintaining a thin wall thickness for the sheet 130.

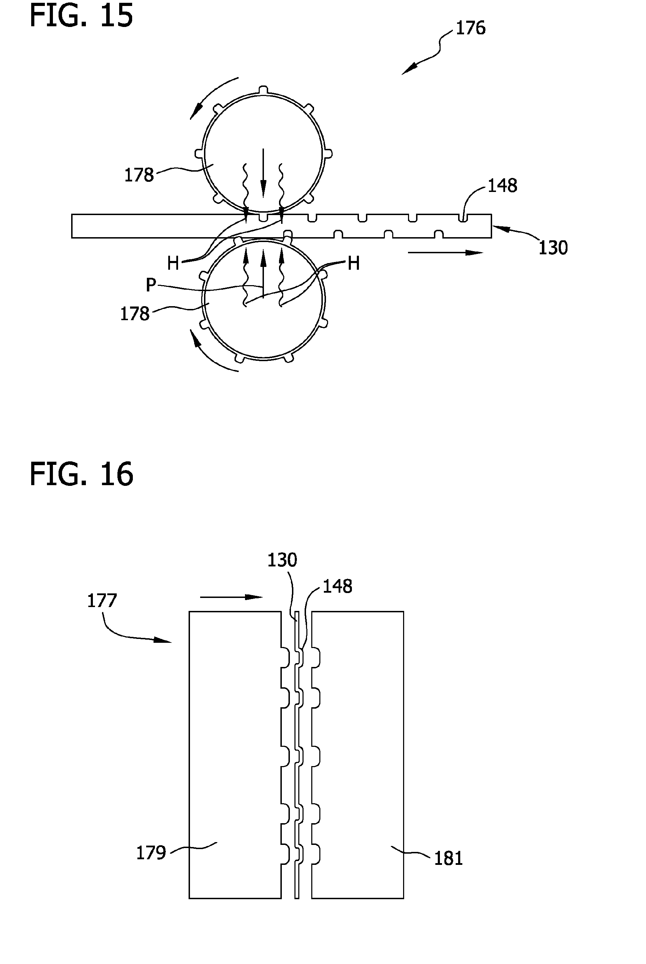

Fig. 15 illustrates components utilized in an exemplary embodiment of a heat embossing process 176. In heat embossing process 176, profile 148 is manufactured under applied heat H and pressure P while sheet 130 is extruded through roller dies 178. Heat embossing process 176 forms profiles 148 while sheet 130 is extruded to facilitate increasing material parameters of sheet 130 such as stability, stiffness and rigidity of sheet 130 while maintaining a thin wall thickness for sheet 130.

Fig. 16 illustrates components utilized in an exemplary embodiment of a cold forming, multi-roller process 177. In cold forming process 177, profile 148 is manufactured between a male piece 179 and a female piece 181 while sheet 130 is moved between male piece 179 and female piece 181. Cold forming process 177 forms profiles 148 to facilitate increasing material parameters of the sheet 130 such as stability, stiffness and rigidity of the sheet 130 while maintaining a thin wall thickness for the sheet 130.

The embossing processes 172, 176, 177 include capabilities such as the ability to form ductile sheets 130; the ability to form sheets 130 in high production runs; the ability to maintain the same material thickness before and after embossing the sheet 130; the ability to produce unlimited patterns and the ability to produce sheets 130 with no little or no irregularities throughout the sheet 130.

The manufacturing processes 164, 172, 176 and 177, as illustrated in Figs. 10, 11 and 12, produce profiled sheets 130 having a length in the range between about 1 m and about 60 m. In the exemplary embodiment, the length of profiled sheet 130 is from about 15 m to about 20 m. Exemplary manufacturing processes 164, 172, 176 and 177 produce the thickness of the profiled sheet 130 in the range between about 0.10 mm and about 60 mm. In the exemplary embodiment, the produced thickness of the profiled sheet 130 is from about 5 mm to about 20 mm. Manufacturing processes 164, 172, 176 and 177 can produce any length and/or width of sheet 130 that complies with transportation regulations.

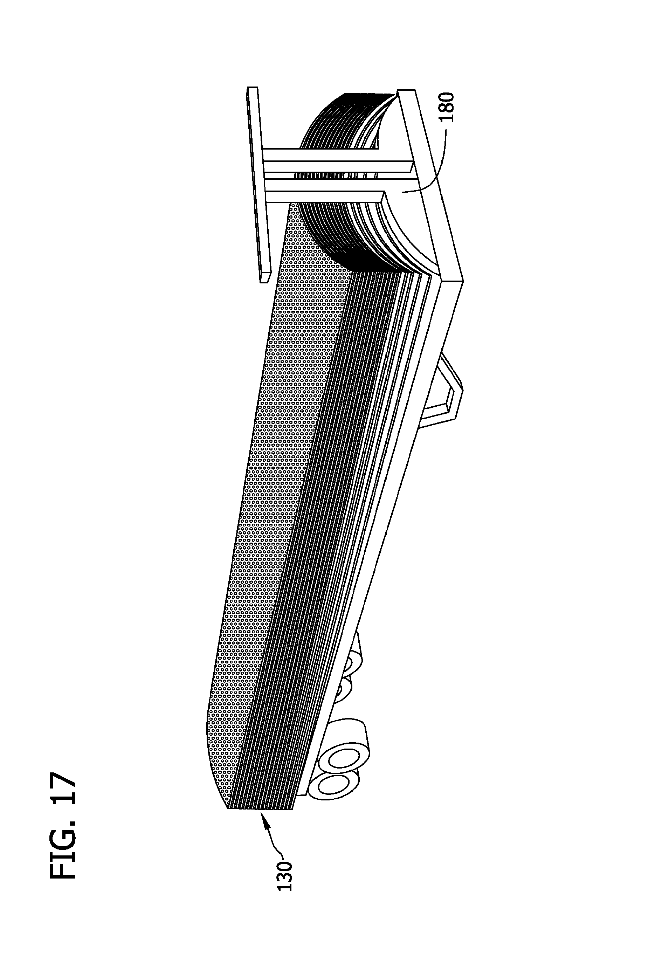

Fig. 17 illustrates sheets 130 that include profiles 148 formed thereon loaded on a cargo carrier 180 such as a flat bed truck. Sheets 130 are loaded to facilitate successively stacking sheets 130 by inserting profiles 148 of one sheet 130 into adjacent voids 156 of an adjacent sheet 130. Sheets 130 are successively stacked to a height on carrier 180 that complies with transportation regulations. Since profiled sheets 130 are thin walled and have low mass with respect to traditionally fabricated tower sections, successively stacking sheets 130 on carrier 180 facilitates economically transporting a plurality of sheets 130 to a tower assembly site 182 (shown in Fig. 15). At tower assembly site 182, stacked sheets 130 are unloaded from carrier 180. Sheets 130 can be unloaded in a lay down area (not shown) and cataloged by thickness and/or length based on respective section 128 (shown in Fig. 2) of tower mast 102 (shown in Fig. 1).

Alternatively, prior to any shipping of sheets 130, each sheet 130 can be configured and coupled to facilitate forming section 128 (Fig. 2). Since sheets 130 are thin walled and have a low mass, longer sections 128 can be transported on carrier 180 while complying with transportation regulations. Further, since sections 128 can have different diameters to facilitate forming different portions of tower mast 102 (shown in Fig. 1), sections 128 can be nested or telescoped within one another (not shown) while complying with transportation regulations.

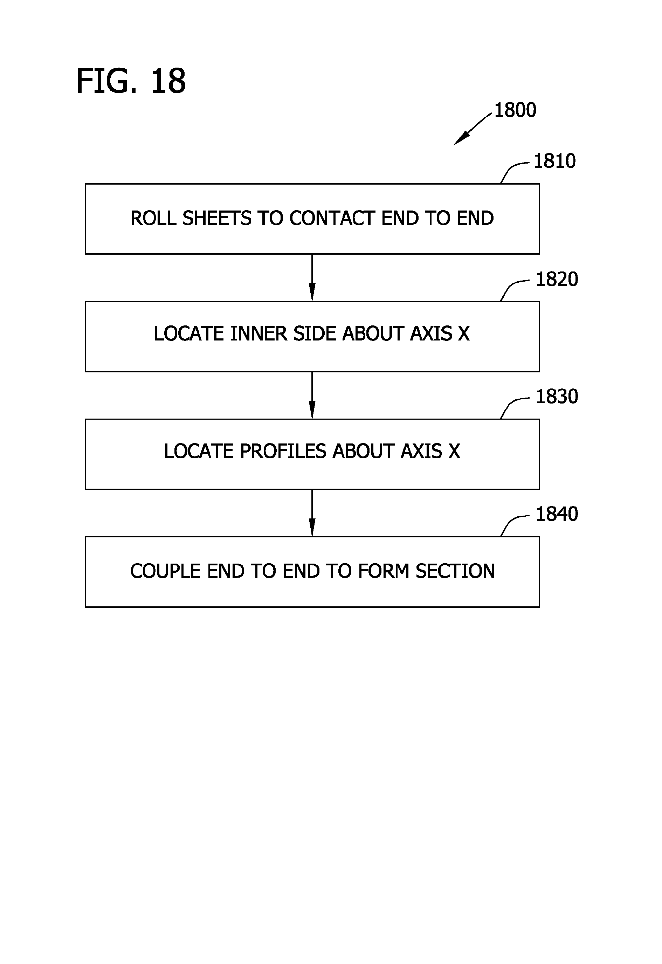

Fig. 18 illustrates a flowchart 1800 of an exemplary method for use in manufacturing section, such as section 128 shown in Figs. 2 and 3. Each sheet, such as sheet 130 shown in Figs. 2 and 3, is rolled 1810 to facilitate contacting end 136 to end 138. In this configuration, inner side 142 of sheet 130 is positioned 1820 about longitudinal axis X (shown in Fig. 2). Further, pluralities of profiles, such as profiles 148 shown in Fig. 3, are positioned radially 1830 about axis X. End 136 is coupled 1840 to end 138 by a fastener 184 (shown in Fig. 2) to facilitate forming section 128. In the exemplary embodiment, fastener, such as fastener 184, includes a weld to facilitate coupling end 136 to end 138. Fastener 184 may include any coupling mechanism to join end 136 to end 138. In the exemplary embodiment, formed section 128 includes a tubular shape. Shape of section 128, however, may include any configuration that facilitates formation of tower mast, such as tower mast 102 shown n Fig. 1. Further section 128 includes any orientation to form tower mast having shape, such as but not limited to triangular, square, pentagonal, hexagonal and octagonal shape.

Sections 128 are manufactured to correlate to different portions of tower mast (shown in Fig. 1). For example, sections 128 manufactured for a lower base portion of tower mast 102 can have longer lengths and greater thicknesses than sections 128 for the intermediate and top portions of tower mast 102. As an example, section 128 for a base portion of tower mast 102 can have a diameter in the range between about 6 m and about 10 m. In the exemplary embodiment, section 128 for base portion has a diameter of about 8 m. The thickness of section 128 for base portion of tower mast 102 includes a range between about 5 mm and about 20 mm. In the exemplary embodiment, section 128 for base portion of tower mast 102 has a thickness of about 12 mm.

Further, sections 128 for an intermediate portion of tower mast 102 can have a diameter in the range between about 2 m and about 5 m. In the exemplary embodiment, section 128 for intermediate portion of tower mast 102 has a diameter of about 3.5 m. The thickness of section 128 for intermediate portion of tower mast 102 includes a range between about 5 mm and about 20 mm. In the exemplary embodiment, section 128 for intermediate portion has a thickness of about 9 mm.

Still further, sections 128 for a top portion of tower mast 102 can have a diameter in the range between about 2 m and about 5 m. In the exemplary embodiment, section 128 for top portion of tower mast 102 has a diameter of about 2.5 m. The thickness of section 128 for top portion includes a range between about 5 mm and about 20 mm. In the exemplary embodiment, section 128 for top portion of tower mast 102 has a thickness of about 9 mm.

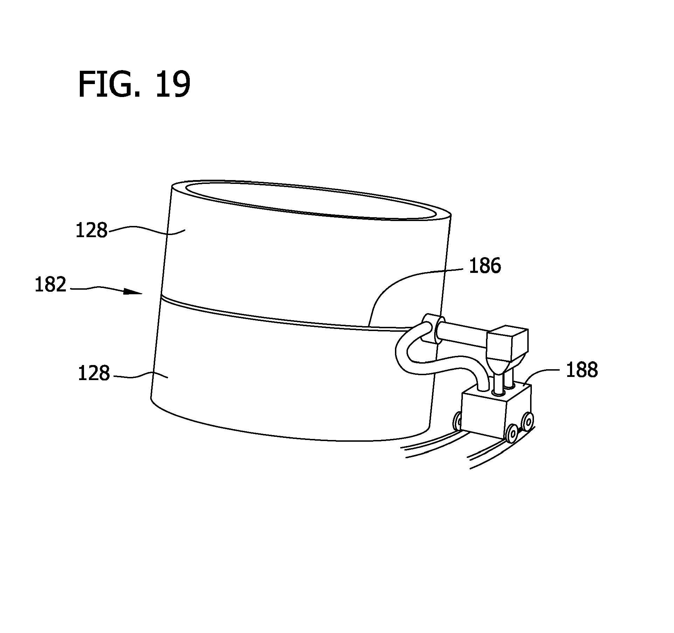

Fig. 19 illustrates a pair of rolled sections 128 being coupled together at tower assembly site 182. In the exemplary embodiment, successive sections 128 are positioned adjacent in an end-to-end configuration. One section 128 is coupled to adjacent section 128 by a fastener 186 to facilitate forming portions of the tower mast 102. In the exemplary embodiment, adjacent sections 128 are welded together by a portable, movable welding assembly 188. In one embodiment, welding assembly 188 includes a welder used in hybrid-laser arc welding (known as HLAW). HLAW welder facilitates a single pass weld that is not orientation sensitive. Portable welding assembly 188 provides a faster traverse speed with high weld efficiency. Sections 128 are successively coupled to facilitate forming tower mast 102 (shown in Fig. 1). Fastener 186 is configured to facilitate coupling first end 136 to second end 138 to facilitate forming the body (shown in Fig. 4) about the longitudinal yaw axis 116 (shown in Fig. 1) of tower mast 102 and to facilitate radially positioning the plurality of profiles 148 around longitudinal axis 116 of tower mast 102. Any welding process such as, but not limited to, electron beam welding ("EBW") and friction stir welding ("FSW welding") can be used to facilitate forming sections 128 and/or joining sections 128 together.

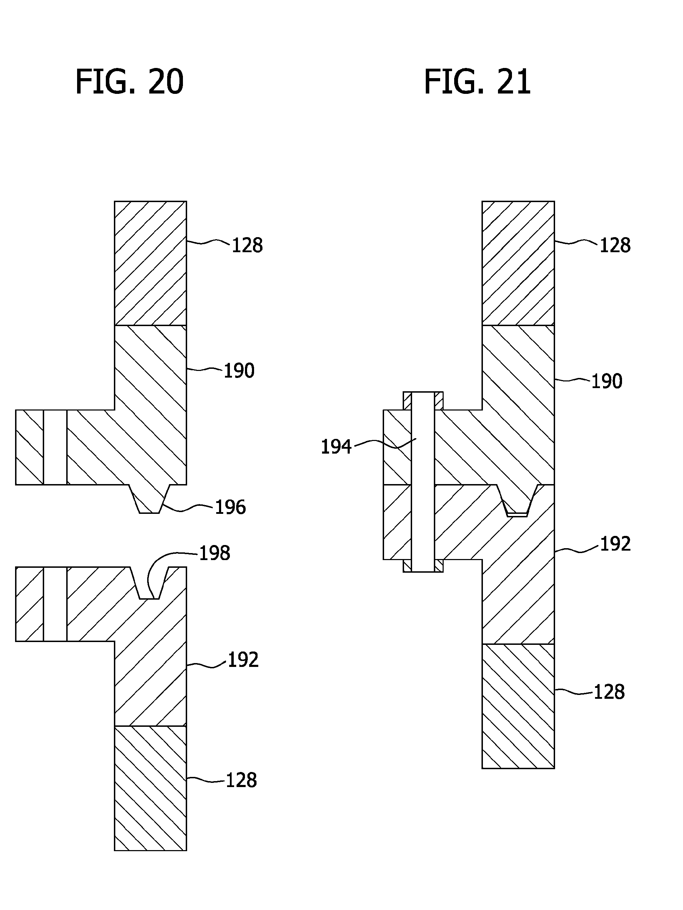

Fig 20 illustrates a side view of section 128 coupled to another section 128 by flange portions 190, 192. Based on the tower height, one section 128 may be welded to a flange portion 190 and another section 128 may be welded to another flange portion 192. Fig. 21 illustrates flange portion 190 coupled to flange portion 192 by a fastener 194. Flange portions 190, 192 can have any configuration to facilitate coupling one section 128 to another section 128. In one suitable embodiment, section 128 is welded to a male portion of flange 190 having a projection 196. Another section 128 is welded to a female portion of flange 192 having a slot 198. Any welding process such as, but not limited to, HLAW, EBW and FSW welding can be used to join sections 128 with flange portions 190, 192. Projection 196 is inserted into slot 198 and fastener 194 couples flange portion 190 to flange portion 192.

Various of the embodiments described herein provide a tower section for a wind turbine tower. The disclosed dimensional ranges include all sub ranges therebetween. The dimensional ranges for the profiles, the sheets and sections facilitate reducing the wall thickness and weight of the tower mast while increasing the stiffness of the tower mast. Additionally, the dimensional ranges for the profiles, the sheets and sections facilitate manufacturing and assembly of the tower mast while reducing material, transportation and assembly costs. Further, the dimensional ranges for the profiles, the sheets and sections facilitate complying with transportation regulations.

The tower section can be used for new manufacture of wind turbines or for integration with existing wind turbines. In one embodiment, the tower section includes a profiled structure that facilitates decreasing the wall thickness of the tower mast and reducing the mass of the tower mast. The profiled section also increases stiffness of the tower mast to enhance the strength/weight ratio of the tower. Additionally, the tower section further enhances the moment of inertia of the tower as inertia is proportional to stiffness. The increased stiffness and lower mass of the tower mast reduces the required base mass to support the tower mast in the ground.

One technical effect of the tower section described herein may include the profile within the section which facilitates reducing the wall thickness and weight of the tower mast. Another technical effect of the profile may include increasing the stiffness of the tower mast. The profiled section enables large mega watt turbines to be built with higher tower mast heights. A further technical effect of the profile may include sequentially stacking and/or nesting the tower sections during transportation. Another technical effect of the profile may include coupling tower sections together at the assembly site. The profiled sections can decrease the overall cost of the tower by reducing direct material costs, transportation costs and assembling costs.

Exemplary embodiments of a turbine tower, profiled sheet, and methods of manufacturing and assembling the tower mast are described above in detail. The turbine tower, profiled sheet, and methods are not limited to the specific embodiments described herein, but rather, components of the turbine tower and/or the profiled sheet and/or steps of the method may be utilized independently and separately from other components and/or steps described herein. For example, the profiled sheet and methods may also be used in combination with other power systems and methods, and are not limited to practice with only the wind turbine as described herein. Rather, the exemplary embodiments can be implemented and utilized in connection with many other turbine or power system applications or other support structures.

Although specific features of various embodiments of the invention may be shown in some drawings and not in others, this is for convenience only. In accordance with the principles of the invention, any feature of a drawing may be referenced and/or claimed in combination with any feature of any other drawing.

This written description uses examples to disclose the invention, including the preferred mode, and also to enable any person skilled in the art to practice the invention, including making and using any layers or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

Various aspects and embodiments of the present invention are defined by the following numbered clauses:
1. A structural section for a tower mast having a longitudinal axis, said section comprising:
   a sheet comprising a first end, a second end and a body disposed between said first end and said second end;
   a plurality of profiles formed within said body, each said profile comprising a deformation offset from said body; and
   a fastener configured to facilitate coupling said first end to second end to facilitate forming said body about the longitudinal axis and facilitate radially positioning said plurality of profiles around the longitudinal axis.
2. The structural section of clause 1, wherein said body comprises an inner side, an outer side and a sidewall disposed between said inner side and said outer side.
3. The structural section of any preceding clause, wherein said sidewall comprises a thickness, as measured between said inner side and said outer side, in a range between about 0.10 mm and about 60 mm.
4. The structural section of any preceding clause, wherein said deformation is offset from said inner side at a distance in a range between about 0.10 mm and about 10 mm.
5. The structural section of any preceding clause, wherein said profiles are uniformly positioned within said body.
6. The structural section of any preceding clause, wherein each said profile comprises a substantially square deformation.
7. The structural section of any preceding clause, wherein said substantially square deformation comprises substantially rounded corners.
8. The structural section of any preceding clause, wherein said deformation includes an end and opposing walls, said end and said walls form a void.
9. The structural section of any preceding clause, wherein said sheet comprises a plurality of sheets coupled in an end-to-end configuration.
10. A method of manufacturing a structural section of a tower mast, said method comprising:
   forming a sheet of material having a first end, a second end and a body disposed therebetween;
   forming a plurality of profiles within said body; and,
   coupling said first end to said second end.
11. The method of any preceding clause, wherein forming said plurality of profiles comprises applying a pressure to said body.
12. The method of any preceding clause, wherein applying a pressure comprises applying a hydrostatic pressure.
13. The method of any preceding clause, wherein applying a pressure comprises applying a die to said body.
14. The method of any preceding clause, wherein coupling said first end to said second end comprises welding said first end to said second end.
15. The method of any preceding clause, further comprising forming said profiles in a repetitive pattern within said body.
16. The method of any preceding clause, further comprising forming said profiles to have a substantially square configuration.
17. The method of any preceding clause, wherein coupling said first end to said second end comprises orientating said profiles radially about a longitudinal axis of said body.
18. A tower mast having a longitudinal axis, comprising:
   a base;
   a structural section coupled to said base, said structural section comprising:
      a sheet comprising a first end, a second end and a body disposed between said first end and said second end;
      a plurality of profiles formed within said body, each profile comprising a deformation offset from said body; and,
      a fastener configured to facilitate coupling said first end to said second end to facilitate forming said body about the longitudinal axis and facilitate radially positioning said plurality of profiles around the longitudinal axis; and,
      a nacelle coupled to said structural section.
19. The tower mast of any preceding clause, wherein said body comprises a thickness, in a range between about 0.10 mm and about 60 mm.
20. The structural section of any preceding clause, wherein said deformation is offset from said body at a distance in a range between about 0.10 mm and about 10 mm.

## Claims

1. A structural section (128) for a tower mast (102) having a longitudinal axis (124), said section (128) comprising:
a sheet (130) comprising a first end (132), a second end (134) and a body (140) disposed between said first end (132) and said second end (134);
a plurality of profiles (148) formed within said body (140), each said profile (148) comprising a deformation (150) offset from said body (140); and
a fastener configured to facilitate coupling said first end (132) to second end (134) to facilitate forming said body (140) about the longitudinal axis (124) and facilitate radially positioning said plurality of profiles (148) around the longitudinal axis (124).

2. The structural section (128) of claim 1, wherein said body (140) comprises an inner side (142), an outer side (144) and a sidewall (146) disposed between said inner side (142) and said outer side (144).

3. The structural section (128) of claim 2, wherein said sidewall (146) comprises a thickness, as measured between said inner side (142) and said outer side (144), in a range between about 0.10 mm and about 60 mm.

4. The structural section (128) of any preceding claim, wherein said deformation (150) is offset from said inner side (142) at a distance in a range between about 0.10 mm and about 10 mm.

5. The structural section (128) of any preceding claim, wherein said profiles (148) are uniformly positioned within said body (140).

6. The structural section (128) of any preceding claim, wherein each said profile (148) comprises a substantially square deformation (150).

7. The structural section (128) of claim 6, wherein said substantially square deformation (150) comprises substantially rounded corners.

8. The structural section (128) of any preceding claim, wherein said deformation (150) includes an end and opposing walls, said end and said walls form a void (156).

9. The structural section (128) of any preceding claim, wherein said sheet (130) comprises a plurality of sheets (130) coupled in an end-to-end configuration.

10. A method of manufacturing a structural section (128) of a tower mast, said method comprising:
forming a sheet (130) of material having a first end (132), a second end (134) and a body (140) disposed therebetween;
forming a plurality of profiles (148) within said body (140); and
coupling said first end (132) to said second end (134).
